Europäisches Patentamt

European Patent Office

Office européen des brevets

Publication number: **0 286 990**
**A1**

## EUROPEAN PATENT APPLICATION

Application number: 88105629.5

Int. Cl.⁴ **H01M 10/36 , H01M 4/58**

Date of filing: 08.04.88

Priority: 17.04.87 US 39243

Date of publication of application:
**19.10.88 Bulletin 88/42**

Designated Contracting States:
**DE FR GB**

Applicant: **GTE LABORATORIES**
**INCORPORATED**
**1209 Orange Street**
**Wilmington Delaware 19801(US)**

Inventor: **Dampier, Frederick W.**
**246 Sycamore Street**
**Watertown, MA 02172(US)**
Inventor: **Mank, Richard M.**
**88 Morningside Path**
**E. Weymouth, MA 02189(US)**

Representative: **Patentanwälte Grünecker,**
**Kinkeldey, Stockmair & Partner**
**Maximilianstrasse 58**
**D-8000 München 22(DE)**

Method of operating and recharging a rechargeable electrochemical cell.

A rechargeable non-aqueous electrochemical cell having a negative electrode of lithium, a positive electrode including $CuF_2$, and an electrolytic solution of $SO_2$ and an electrolyte solute dissolved therein. The cell is repeatedly operated to discharge to a cut-off voltage of not less than 1.1 volts and recharged to a potential of 3.0 volts or higher.

EXAMPLE I

*Fig. 1.*

EP 0 286 990 A1

# METHOD OF OPERATING AND RECHARGING A RECHARGEABLE ELECTROCHEMICAL CELL

This invention relates to electrochemical cells. More particularly, it is concerned with rechargeable non-aqueous electrochemical cells.

There have been recent developments in rechargeable electrochemical cells of the non-aqueous type which employ lithium or similar materials as the negative electrode material. These cells employ an inorganic electrolytic solution of sulfur dioxide ($SO_2$) together with a suitable solute. Various materials have been employed as the positive electrode material. The use of $CuCl_2$ and $CuBr_2$ as positive electrode materials is disclosed in U.S. patent No. 4,515,875 to Bowden and Dey. Patent No. 4,508,798 to Gopikanth, Kuo, and Bowden is directed to the use of $CoCl_2$ as the positive electrode material. Patent No. 4,508,799 to Gopikanth and Kuo, and Patent No. 4,508,800 to Gopikanth, Kuo, and Schlaikjer are directed to the use of $NiCl_2$ and $FeBr_3$, respectively.

The method of operating and recharging a rechargeable non-aqueous electrochemical cell in accordance with the present invention provides improved performance characteristics with improved weight and volume to energy relationships. The cell comprises a negative electrode including an alkali or alkaline earth metal, a positive electrode including cupric fluoride ($CuF_2$), and an inorganic electrolytic solution in contact with the negative electrode and positive electrode comprising sulfur dioxide ($SO_2$) and an inorganic electrolyte solute dissolved therein. In accordance with the method the electrochemical cell is operated to discharge the cell to a potential which is not less than 1.1 volts. The cell is then charged to a potential of 3.0 volts or higher. The cell is repeatedly operated to discharge to a potential of not less than 1.1 volts and charged to a potential of 3.0 volts or higher.

In the drawings:

Fig. 1 is a graph of the depth of discharge achieved as a function of the number of discharging-charging cycles of a rechargeable electrochemical cell in accordance with the present invention;

Fig. 2 is a graph illustrating the discharge behavior for certain cycles of the same cell;

Fig. 3 is a graph of the current and potential behavior of the same cell during charging for a particular cycle;

Fig. 4 is a graph of the depth of discharge achieved as a function of the number of discharging-charging cycles of a control cell for comparison with the cell behavior illustrated in Figs. 1, 2, and 3; and

Fig. 5 is a graph of the discharge behavior for a single discharge of the same control cell.

For a better understanding of the present invention, together with other and further objects, advantages, and capabilities thereof, reference is made to the following discussion and appended claims in connection with the above-described drawings.

Rechargeable electrochemical cells operated in accordance with the present invention have an alkali or alkaline earth metal negative electrode, preferably lithium, including mixtures and alloys thereof; an electrolytic solution comprising sulfur dioxide ($SO_2$) and an electrolyte salt soluble in $SO_2$; and a positive electrode comprising cupric fluoride ($CuF_2$).

Preferably, the $CuF_2$ positive electrode is made from a mixture of $CuF_2$ and conductive carbonaceous material, such as graphite or carbon black, together with a suitable binder, such as polyethylene, polytetrafluoroethylene, or other halogenated polymers. These materials in the form of fine powders are well mixed and then compressed onto a conductive grid or screen. The preferred percentage of $CuF_2$ is between 60% and 80% by weight, with the conductive carbonaceous material being between 30% and 10% by weight, and with the binder being about 10% by weight.

The lithium negative electrode and/or the $CuF_2$ positive electrode desirably may be individually sealed within sheets of microporous fluorocarbon polymers. Separators made from nonwoven glass fibers, alumina, or other inert materials may be used alone or in combination with microporous separators.

The totally inorganic electrolyte used in the cell consists of liquid sulfur dioxide ($SO_2$) and an inorganic electrolyte salt, no organic cosolvents are employed. The electrolyte solute may be an alkali or alkaline earth metal clovoborate salt or an alkali or alkaline earth metal halide salt. More specifically, $LiGaCl_4$ is a preferred solute although other salts, for example, $LiAlCl_4$, $Li_2B_{10}Cl_{10}$, and $Li_2B_{12}Cl_{12}$ or mixtures thereof may be employed, provided that they are soluble in the $SO_2$ without requiring any organic cosolvents.

The cells as described are operated as rechargeable cells. During operation to provide electrical power to a load they become discharged. In accordance with the present invention the cells are not discharged below a cutoff potential of 1.1 volts. Preferably, they should not be discharged below a potential of 1.5 volts. After being discharged, the cells are charged to a potential of 3.0 volts or higher. Preferably, they are recharged to a potential of from 3.1 to 4.4 volts at a constant charging rate equal to or less than 0.83 milliamperes per square centimeter of surface area of the positive $CuF_2$ electrode. The cycle of operating the cell to provide electrical power and then recharging to restore the ability of the cell to provide electrical power may be repeated continually.

The following examples are for the purpose of further illustrating and explaining the present invention. and are not to be taken as limiting the scope thereof.

EXAMPLE I

Positive electrodes were made by pressing a thoroughly mixed blend of 60.13% by weight $CuF_2$, 29.73% by weight graphite, and 10.14% by weight polyethylene powders onto a 2.0 cm $\times$ 3.0 cm expanded nickel grid. The mixture of powders was pressed at a pressure of 5400 psi at a temperature of 99°C for 5 minutes to form positive electrodes 0.96 mm thick. The theoretical capacity of the $CuF_2$ positive electrode was 161 mAhr based on a 1.0 electron $CuF_2$ reduction. Negative electrodes were made by pressing two sheets of 0.38 mm lithium foil onto both sides of a 2.0 cm $\times$ 3.0 cm expanded nickel grid to form negative electrodes 0.81 mm thick. The theoretical capacity of the pair of lithium negative electrodes was 1920 mAhr. Cells were assembled by wrapping a $CuF_2$ positive electrode in three layers of 0.13 mm thick nonwoven glass fiber separator paper, and sandwiching the wrapped positive electrode between two of the lithium negative electrodes. The cell was filled with 16.3 grams of an electrolytic solution of approximately 1.0 M $LiGaCl_4$ in $SO_2$.

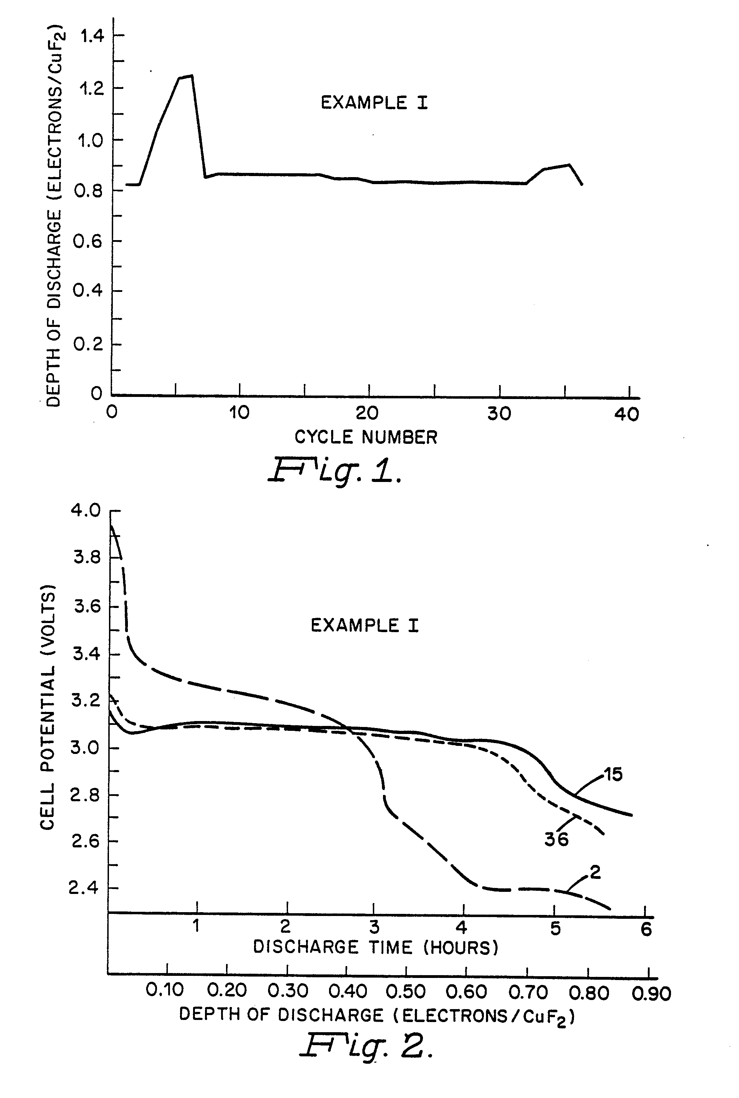

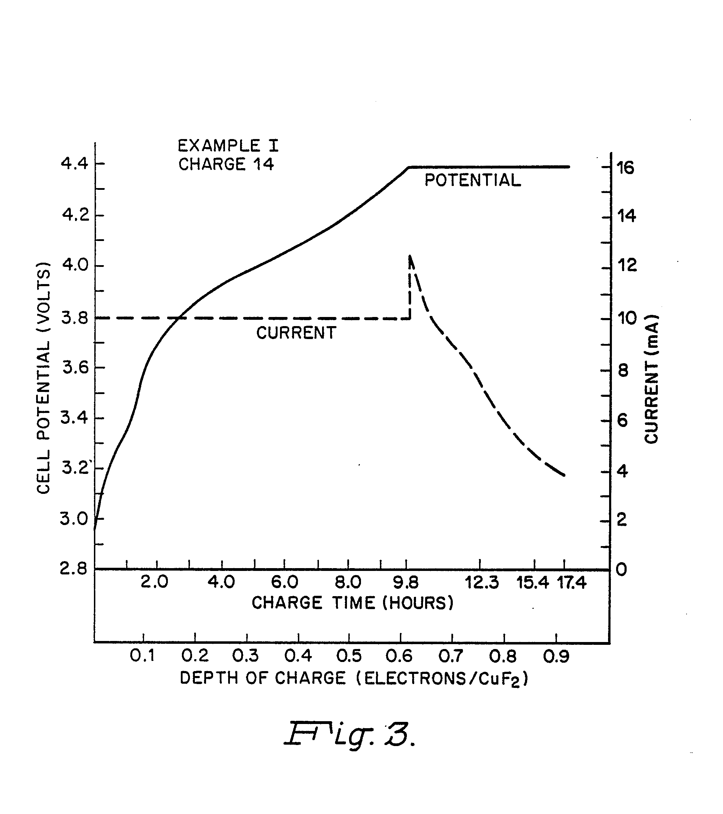

The open circuit potential of the cell was 3.58 volts after storage for 24 hours at about 23°C. The cell was discharged at 2.0 mA/cm$^2$ (24 mA total cell current). At no time was the cell discharged below 2.00 volts. The cell was charged at a current of 0.83 mA/cm$^2$ to an upper potential of 4.20 volts for cycles 1 through 6, after which for each charge the cell was charged potentiostatically for 18 hours. For cycle 7 and subsequent cycles potentiostatic charging was begun at 4.40 volts and carried out for 18 hours. Fig. 1 depicts the depth of discharge achieved at 2.0 mA/cm$^2$ from cycle 1 through cycle 36. Fig. 2 depicts the behavior of the cell potential during discharge at a temperature of about 23°C for cycles 2, 15. and 36. Fig. 3 depicts the behavior of the cell potential and current during charging for cycle 14.

EXAMPLE II

A cell was fabricated as in Example I except that the $CuF_2$ positive electrode had a theoretical capacity of 156 mAhr based on a 1 electron/$CuF_2$. The cell was cycled 14 times, and at no time was it discharged below 2.00 volts. After the 14 discharge and recharging cycles the cell was stored at about 23°C for 31 days. The discharge capacities at 2.0 mA/cm$^2$ obtained to 3.0 volts before and after the 31-day storage period were 111.6 and 71.8 mAhr, respectively. That is, 64.3% of the charge was retained during storage. The open circuit potential of the cell after storage was 3.48 volts. Upon startup after storage, discharging at a rate of 2.0 mA/cm$^2$. the minimum potential was 2.95 volts, recovering to 3.0 volts after 3.4 minutes.

EXAMPLE III

For comparative purposes an electrochemical cell was constructed employing a graphite positive electrode. The graphite positive electrode was fabricated by pressing a thoroughly mixed blend of 79.92% by weight graphite and 20.08% polyethylene powders onto a 2.0 cm $\times$ 3.0 cm expanded nickel grid. The mixture was pressed on the grid at a pressure of 5400 psi at a temperature of 99°C for 5 minutes to form an electrode 1.1 mm thick. The positive electrode contained 0.5962 grams of graphite and would have a theoretical capacity of 1.3305 Ahr for a 1 electron reduction per carbon atom. The graphite positive electrode was wrapped in three layers of 0.13 mm thick nonwoven glass fiber separator paper and sandwiched between 2.0 cm $\times$ 3.0 cm lithium negative electrodes, each about 0.81 mm thick. The lithium negative electrodes were fabricated as described in Example I and had a theoretical capacity of 2.055 Ahr. The cell was filled with 19.5 grams of an electrolytic solution of approximately 1.0M $LiGaCl_4$ in $SO_2$.

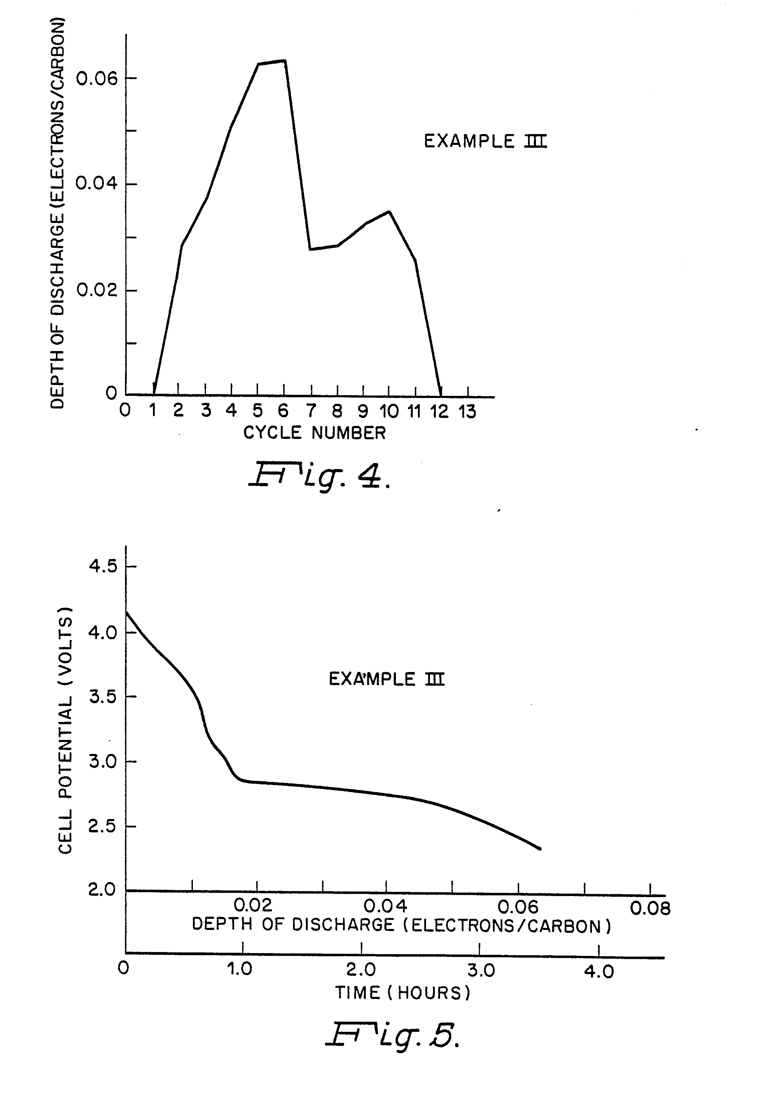

The open circuit potential of the cell was 3.12 volts at about 23°C. The cell was discharged at 2.0 mA/cm$^2$ (24 mA total cell current) to a 2.35 volt cut-off potential except for cycle 8 which was at 1.0 mA/cm$^2$. The charging current was 0.83 mA/cm$^2$ with a 4.40 volt upper limit. However, during charging the cell potential did not exceed 4.25 volts and the charge limit was set for periods ranging from 10 to 20 hours. Fig. 4 depicts the depth of discharge achieved for the graphite electrode cell for cycles 1 through 12. Fig. 5 depicts the behavior of the cell potential during the discharge portion of cycle 4 at a discharge current of 2.0 mA/cm$^2$ and a temperature of 23°C.

The greatest capacity obtained for the lithium/graphite cell of Example III was 83.74 mAhr (140 mAhr gram graphite) on the discharge portion of cycle 5. Thus, since the $CuF_2$ electrode in the Li $CuF_2$ cell of Example I contained 0.3015 grams of graphite, in principle it could be expected to deliver a maximum 42.2 mAhr to a 2.35 volts cut-off at 2.0 mA/cm², based on reduction of $SO_2$ at the graphite. The Li $CuF_2$ cell of Example I, however, delivered up to 146.4 mAhr to a 2.53 volt cut-off potential. Therefore, the $CuF_2$ and not the graphite was the primary active material in the cell of Example I, since graphite does not cycle more than 12 cycles and could not account for more than 28.8% of the observed capacity in Example I.

Rechargeable Li $CuF_2$ electrochemical cells operated in accordance with the present invention offer improved gravimetric energy density, lower cost, and other advantages over previously known rechargeable lithium electrochemical cells. The improvement in gravimetric energy density is due to the low molecular weight of $CuF_2$ and also to its high discharge potential. The theoretical gravimetric energy density of the Li $CuF_2$ cell is 806 Whr lb based on a 2.0 electron $CuF_2$ reduction and an experimental open circuit potential of 3.58 volts. By comparison, the theoretical gravimetric energy density of the Li $CuCl_2$ cell is 592 Whr lb based on a 2.0 electron $CuCl_2$ reduction and an experimental open circuit potential of 3.43 volts.

Prior to the present invention there were well-established theoretical reasons to expect that a Li $CuF_2$ cell would not operate well with $LiAlCl_4$ $SO_2$ or $LiGaCl_4$ $SO_2$ electrolyte, and would require a fluoride-containing electrolyte, such as $LiAlF_4$ or $LiGaF_4$ $SO_2$ in order to achieve discharge at a practical current density; of the order of 1 to 2 mA/cm². According to theory, some method of increasing the solubility of $CuF_2$ would be required, because a positive electrode material with poor electrical conductivity would have to be soluble, to at least some extent, in the $SO_2$ electrolyte. The discharge of such positive electrodes usually requires solvation and transport of the ion of the positive electrode material. Thus, it was unexpected that the Li $CuF_2$ cell with a $LiGaCl_4$ $SO_2$ all inorganic electrolyte would provide excellent cycling performance. It has been demonstrated that $CuF_2$ is electroactive in an $SO_2$ electrolyte. The cell operated over 35 discharge cycles with an average depth of 0.84 electron $CuF_2$ in a $LiGaCl_4$ non fluoride-containing electrolyte. The open circuit potential of the Li $CuF_2$ did not fall to the lower open circuit potential of the Li $CuCl_2$ cell after extensive cycling and storage; thus indicating that the Li $CuF_2$ cell was not converted to a Li $CuCl_2$ cell by chloride exchange.

While there has been shown and described what are considered to be preferred embodiments of the present invention, it will be obvious to those skilled in the art that various changes and modifications may be made therein without departing from the invention as defined by the appended claims.

## Claims

1. The method of operating and recharging a rechargeable non-aqueous electrochemical cell; the electrochemical cell comprising
a negative electrode including an alkali or alkaline earth metal;
a positive electrode including $CuF_2$; and
an inorganic electrolytic solution in contact with the negative electrode and positive electrode comprising $SO_2$ and an electrolyte solute dissolved therein; and
the method comprising
operating said electrochemical cell to discharge the cell to a potential of not less than 1.1 volts;
charging the cell to a potential of 3.0 volts or higher; and
repeatedly operating the cell to discharge the cell to a potential of not less than 1.1 volts and charging the cell to a potential of 3.0 volts or higher.

2. The method of operating and recharging a rechargeable non-aqueous electrochemical cell in accordance with claim 1 wherein
said positive electrode comprises a mixture of $CuF_2$ and conductive carbonaceous material.

3. The method of operating and recharging a rechargeable non-aqueous electrochemical cell in accordance with claim 2 wherein
said electrolytic solution consists essentially of an electrolyte solute selected from the group consisting of alkali and alkaline earth metal clovoborate salts and alkali and alkaline earth metal tetrahalogalate and tetrahaloaluminate salts dissolved in $SO_2$.

4. The method of operating and recharging a rechargeable non-aqueous electrochemical cell in accordance with claim 3 wherein
said negative electrode includes lithium metal.

5. The method of operating and recharging a rechargeable non-aqueous electrochemical cell in accordance with claim 4 wherein
said $CuF_2$ constitutes from 60 to 80 percent by weight of said mixture.

6. The method of operating and recharging a rechargeable non-aqueous electrochemical cell in accordance with claim 5 wherein
said electrolytic solution consists essentially of $LiAlCl_4$ or $LiGaCl_4$ dissolved in $SO_2$.

7. The method of operating and recharging a rechargeable non-aqueous electrochemical cell in accordance with claim 6 wherein

charging said cell includes charging the cell at a charging rate of 0.83 milliamperes per square centimeter of positive electrode surface area or less.

8. The method of operating and recharging a rechargeable non-aqueous electrochemical cell in accordance with claim 7 wherein

operating said cell includes operating said cell to discharge the cell to a potential of not less than 1.5 volts.

9. The method of operating and recharging a rechargeable non-aqueous electrochemical cell in accordance with claim 8 wherein

charging said cell includes charging said cell to a potential of between 3.1 and 4.4 volts.

10. The method of operating and recharging a rechargeable non-aqueous electrochemical cell in accordance with claim 9 wherein

said electrolytic solution consists essentially of $LiGaCl_4$ dissolved in $SO_2$.

Fig. 1.

Fig. 2.

Fig. 3.

Fig. 4.

Fig. 5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 142 469 (DURACELL INTERNATIONAL INC.) <br> * Page 1, line 45 - page 2, line 112; page 3, example 8 * <br> --- | 1-5 | H 01 M 10/36 <br> H 01 M 4/58 |
| A | J. ELECTROCHEM. SOC., vol. 120, no. 12, December 1973, pages 1613-1619; J.J. AUBORN et al.: "Lithium anode cells operating at room temperature in inorganic electrolytic solutions" <br> * Abstract; page 1613, experimental; page 1617, right-hand column, last paragraph - page 1618, left-hand column, paragraph 2 * <br> --- | 1-5 | |
| A | CHEMICAL ABSTRACTS, vol. 105, no. 10, September 1986, page 199, no. 82165f, Columbus, Ohio, US; A.N. DEY et al.: "All inorganic ambient temperature rechargeable lithium battery. II" & PROC. POWER SOURCES SYMP. 1984, 31st, 89-97 <br> * Abstract * <br> --- | 1 | |
| A | FR-A-2 546 669 (DURACELL INTERNATIONAL INC.) <br> * Abstract; page 3, line 25 - page 4, line 10; page 7, example 4; page 8, example 6 * <br> --- | 1 | TECHNICAL FIELDS SEARCHED (Int. Cl.4) <br><br> H 01 M 10/36 <br> H 01 M 4/58 |
| D,A | FR-A-2 518 319 (DURACELL INTERNATIONAL INC.) <br> * Whole document * & US-A-4 515 875 <br> ----- | 1 | |

The present search report has been drawn up for all claims

| Place of search | Date of completion of the search | Examiner |
|---|---|---|
| THE HAGUE | 26-07-1988 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................
& : member of the same patent family, corresponding document

EPO FORM 1503 03.82 (P0401)